# EUROPEAN PATENT APPLICATION

(11) **EP 1 847 802 A1**
(43) Date of publication of application: **24.10.2007**
(21) Application number: 07106034.7
(22) Date of filing: 12.04.2007
(51) Int. Cl.: G01C 19/56

(54) **Angular velocity sensor**

(30) Priority: 20.04.2006 JP 2006117174
(71) Applicant: Fujitsu Media Devices Limited, Yokohama-shi, Kanagawa 222-0033 (JP); FUJITSU LIMITED, Kawasaki-shi, Kanagawa 211-8588 (JP)
(72) Inventor: Takayuki, Yamaji, Yokohama-shi, Kanagawa 222-0033 (JP); Ishikawa, Hiroshi, Kawasaki-shi Kanagawa 211-8588 (JP); Katsuki, Takashi, Kawasaki-shi Kanagawa 211-8588 (JP); Takahashi, Yuji, Kawasaki-shi Kanagawa 211-8588 (JP); Nakazawa, Fumihiko, Kawasaki-shi Kanagawa 211-8588 (JP); Takagi, Hiroaki, Yokohama-shi, Kanagawa 222-0033 (JP)
(74) Representative: Hitching, Peter Matthew

(57) **Abstract**

An angular velocity sensor includes: first (10a) and second tuning-fork vibrators (10b), each of which respectively includes a base portion and multiple arm portions extending from the base portion; and a mounting portion (20a, b) mounting the first (10a) and second (10b) tuning-fork vibrators, and an end of an arm portion of the first tuning-fork vibrator (10a) opposes a side face of the second tuning-fork vibrator (10b); and a first wire connecting the first tuning-fork vibrator (10a) and the mounting portion extends in a width direction of the first tuning-fork vibrator (10a).

## Description

### BACKGROUND OF THE INVENTION

### 1. Field of the Invention

This invention generally relates to angular velocity sensors, and more particularly, to an angular velocity sensor having multiple tuning-fork vibrators.

### 2. Description of the Related Art

Angular velocity sensors detect an angular velocity at rotation, and are utilized for avoidance of blurring of images due to hand movement, systems such as car navigation systems, automobiles, attitude control systems of robots, and the like. Japanese Patent Application Publication No. 9-292229 (hereinafter, referred to as Document 1) discloses an angular velocity sensor equipped with multiple column-shaped vibrators. Japanese Patent No. 3418245 (hereinafter, referred to as Document 2) discloses an angular velocity sensor detecting multiple axes and supporting a column-shaped vibrator with two points. The aforementioned column-shaped or rod-like vibrator is called tuning-bar vibrator. Also, International Publication No. WO 03/100350 (hereinafter, referred to as Document 3) discloses a tuning-fork vibrator having a base portion and multiple arm portions extending from the base portion.

The tuning-bar vibrator cannot redress the balance of vibration against an external vibration to cancel the vibration. For this reason, if two tuning-bar vibrators are arranged in one package as described in Document 1 and Document 2, an unnecessary vibration (leakage vibration) caused by the external vibration in each tuning-bar vibrator will interfere with each other (interference noise), and will degrade the detection accuracy of the angular velocity. In addition, the tuning-bar vibrators have a narrow unmoved area in the natural vibration frequency. If an area other than the unmoved area is supported in each tuning-bar vibrator, the drive vibration of one of the tuning-bar vibrators will be propagated to the other tuning-bar vibrator, the interference noise will be generated and the detection accuracy of the angular velocity will be degraded. Further, since the whole tuning-bar vibrator vibrates, it is necessary to support the tuning-bar vibrator with two points. Therefore, it is difficult to maintain the position accuracy or balance of the two supporting portions.

Meanwhile, the tuning-fork vibrator has a configuration in which left and right arm portions cancel the external vibration. This can prevent the degradation of the detection accuracy of the angular velocity and the interference noise in an angular velocity sensor having multiple tuning-fork vibrators. However, the tuning-fork vibrator includes an arm portion and a base portion, into or from which an electrical signal is input or output. The angular velocity sensor generally includes multiple tuning-fork vibrators, and has a large mounting area. Therefore, the angular velocity sensors having multiple tuning-fork vibrators need to be reduced in size. In particular, the longer side of the mounting portion in the angular velocity sensor needs to be reduced.

### SUMMARY OF THE INVENTION

The present invention has been made in view of the above circumstances and provides an angular velocity sensor in which the longer side of a mounting portion can be reduced in size.

According to one aspect of the present invention, there is provided an angular velocity sensor including: first and second tuning-fork vibrators, each of which respectively includes a base portion and multiple arm portions extending from the base portion; and a mounting portion mounting the first and second tuning-fork vibrators, and an end of an arm portion of the first tuning-fork vibrator opposes a side face of the second tuning-fork vibrator; and a first wire connecting the first tuning-fork vibrator and the mounting portion extends in a width direction of the first tuning-fork vibrator. It is therefore possible to reduce the size of the mounting portion in the longitudinal direction of the first tuning-fork vibrator.

### BRIEF DESCRIPTION OF THE DRAWINGS

Exemplary embodiments of the present invention will be described in detail with reference to the following drawings, wherein:
FIG. 1 is a perspective view of an angular velocity sensor employed in a first exemplary embodiment of the present invention;
FIG. 2A is a top view of the angular velocity sensor employed in the first exemplary embodiment of the present invention;
FIG. 2B is a perspective view of a tuning-fork vibrator and a supporting portion in the angular velocity sensor employed in the first exemplary embodiment of the present invention;
FIG. 3A and FIG. 3B are views showing electrode patterns on the surfaces of the tuning-fork vibrator;
FIG. 4A and FIG. 4B are views showing vibration modes of the tuning-fork vibrator;
FIG. 5A is a top view of an angular velocity sensor of a comparative example;
FIG. 5B is a top view of the angular velocity sensor employed in the first exemplary embodiment of the present invention;
FIG. 6A through FIG. 6C are other examples of the angular velocity sensor employed in the first exemplary embodiment of the present invention;
FIG. 7A and FIG. 7B are perspective views of an angular velocity sensor in accordance with a second exemplary embodiment of the present invention; and
FIG. 8 is a perspective view of an angular velocity sensor in accordance with a third exemplary embodiment of the present invention.

### DESCRIPTION OF THE PREFERRED EMBODIMENTS

A description will now be given, with reference to the accompanying drawings, of exemplary embodiments of the present invention.

### (First Exemplary Embodiment)

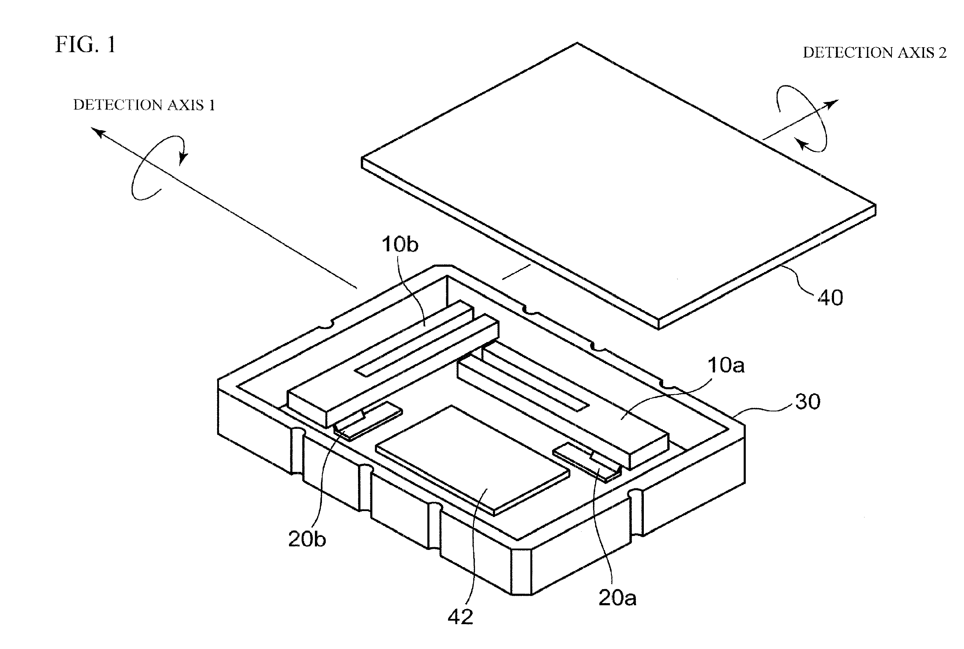

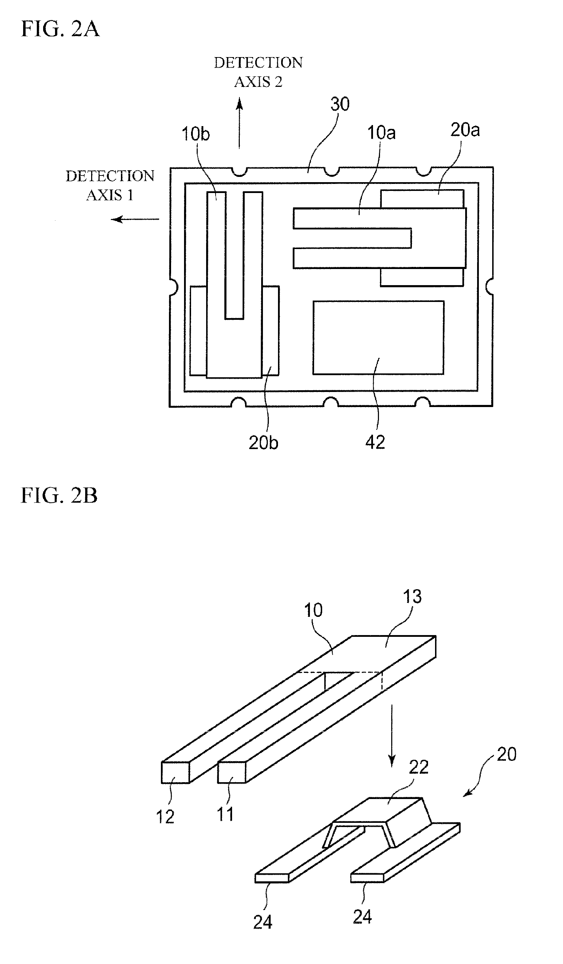

A first exemplary embodiment is an example of an angular velocity sensor in which two tuning-fork vibrators are mounted in a package serving as a mounting portion. FIG. 1 is a perspective view of an angular velocity sensor employed in a first exemplary embodiment of the present invention. FIG. 2A is a top view of the angular velocity sensor employed in the first exemplary embodiment of the present invention (although a cap thereof is not shown). FIG. 2B is a perspective view of a tuning-fork vibrator 10 and a supporting portion 20 in the angular velocity sensor employed in the first exemplary embodiment of the present invention. Referring to FIG. 1 and FIG. 2A, a first tuning-fork vibrators 10a and a second tuning-fork vibrator 10b respectively having two arm portions are respectively secured and mounted through supporting portions 20a and 20b in a cavity type package 30. The first and second tuning-fork vibrators 10a and 10b are substantially perpendicular to each other, and respectively detect angular velocities around a detection axis 1 and a detection axis 2, whereas the detection axis 1 and the detection axis 2 are respectively configured along a longitudinal direction (direction that the arm portions extend) of the first and second tuning-fork vibrators 10a and 10b. The package 30 may include, for example, a control circuit 46 in which electronic parts are mounted in a substrate. The control circuit 46 controls the first and second tuning-fork vibrators 10a and 10b, applies a drive signal to the first and second tuning-fork vibrators 10a and 10b respectively, and is fed with a detection signal respectively by the first and second tuning-fork vibrators 10a and 10b. A cap 40 serves as a lid for the package 30.

Referring to FIG. 2B, each of the first and second tuning-fork vibrators 10a and 10b includes: a base portion 13; and two (multiple) arm portions 11 and 12 extending from the base portion 13. Herein, each of the first and second tuning-fork vibrators 10a and 10b refers to the tuning-fork vibrator 10, and each of the supporting portions 20a and 20b refers to the supporting portion 20. The supporting portion 20 for supporting the tuning-fork vibrator 10 includes: a supporting face 22 for supporting the tuning-fork vibrator 10; and mounting faces 24 for mounting the tuning-fork vibrator 10 in the package 30. The tuning-fork vibrator 10 is firmly fixed to the supporting face 22 by a bonding member, for example, adhesive or the like. Each of the mounting faces 24 of the supporting portion 20 is firmly fixed to the package 30 by a bonding member, for example, adhesive or the like. An adhesive such as epoxy resin or the like may be used. Also, in addition to the adhesive, low-melting glass or solder such as lead-free solder or Au-Sn solder may be used as the bonding member.

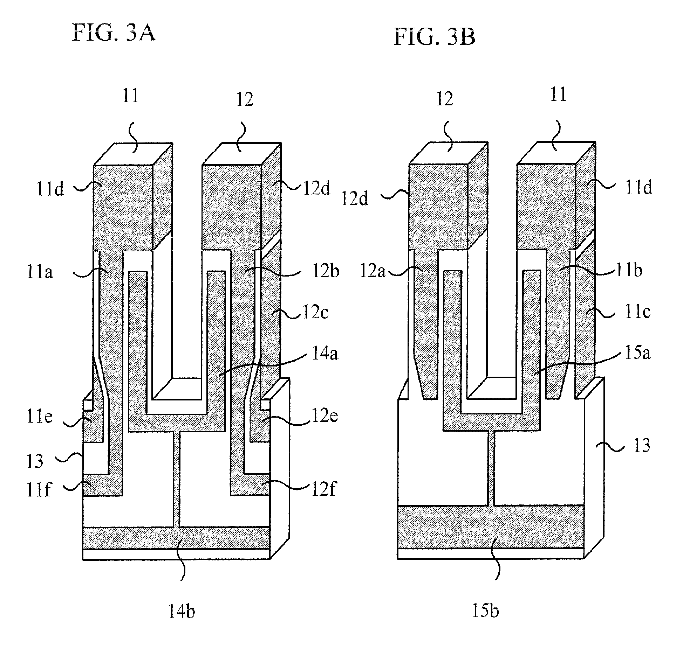

FIG. 3A and FIG. 3B show electrode patterns of the tuning-fork vibrator 10. The tuning-fork vibrator 10 may be made, for example, of a piezoelectric material such as LiNbO₃ (lithium niobate), LiTaO₃ (lithium tantalate), or the like. For example, if LiNbO₃ (lithium niobate) or LiTaO₃ (lithium tantalate) is employed, a high k 23 electromechanical coupling coefficient is obtainable by using a Y-plate ranging from 130° to 140°. There are formed electrodes of metal films such as Au (gold), Al (aluminum), or Cu (copper) on the surface of the tuning-fork vibrator 10.

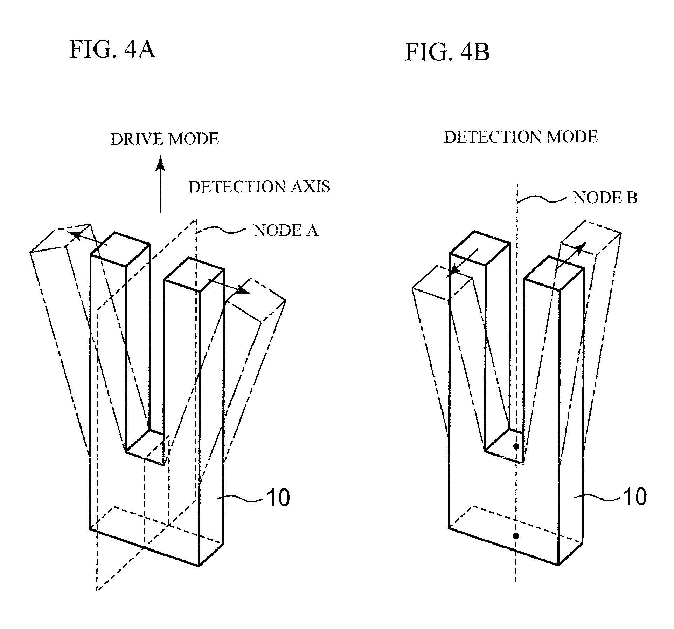

FIG. 3A shows a front side of the tuning-fork vibrator 10, and FIG. 3B shows a rear side thereof. There are provided detection electrodes 11a, 11b, and 11c, at the arm portion 11. The detection electrode 11a and the detection electrode 11b are coupled by an electrode 11d. An extraction electrode 11f is provided to the detection electrode 11a. The detection electrode 11c is connected to an extraction electrode 11e. In a similar manner, there are provided detection electrodes 12a, 12b, and 12c, at the arm portion 12. The detection electrode 12a and the detection electrode 12b are coupled by an electrode 12d. An extraction electrode 12f is provided to the detection electrode 12a. The detection electrode 12c is connected to an extraction electrode 12e. A drive electrode 14a is provided at the front side of the tuning-fork vibrator 10, and is connected to an extraction electrode 14b. In a similar manner, a drive electrode 15a is provided at the rear side of the tuning-fork vibrator 10, and is connected to an extraction electrode 15b. FIG. 4A and FIG. 4B are views explaining a drive mode and a detection mode of the tuning-fork vibrator 10. Referring to FIG. 4A, a drive signal is so fed to the drive electrode 14a and the drive electrode 15a of the tuning-fork vibrator 10 as to generate a vibration mode in which the arm portions 11 and 12 open and close. This vibration is parallel to a plane arranged in the direction of the arm portions 11 and 12, and is called in-plane vibration mode. Here, if an angular velocity is applied to the detection axis, there will be generated another vibration mode in which the arm portions 11 and 12 vibrate back and forth as shown in FIG. 4B due to Coriolis force. This vibration is a twist vibration perpendicular to a plane arranged in the direction of the arm portions 11 and 12, and is called plane-vertical vibration mode. The angular velocity around the detection axis can be detected by detecting the vibration mode with the detection electrodes 11a through 11c and the detection electrodes 12a through 12c. The drive mode refers to a vibration mode used for drive, and the detection mode refers to a vibration mode used for detection. The drive mode and the detection mode are not limited to the vibration modes shown in FIG. 4A or FIG. 4B. It is only necessary that the detection mode be generated by Coriolis force in the drive mode. In each of the vibration modes, node refers to non-vibrating region. In FIG. 4A, the node A corresponds to a plane of symmetry in the tuning-fork vibrator 10. In FIG. 4B, the node B corresponds to a central axis of the tuning-fork vibrator 10.

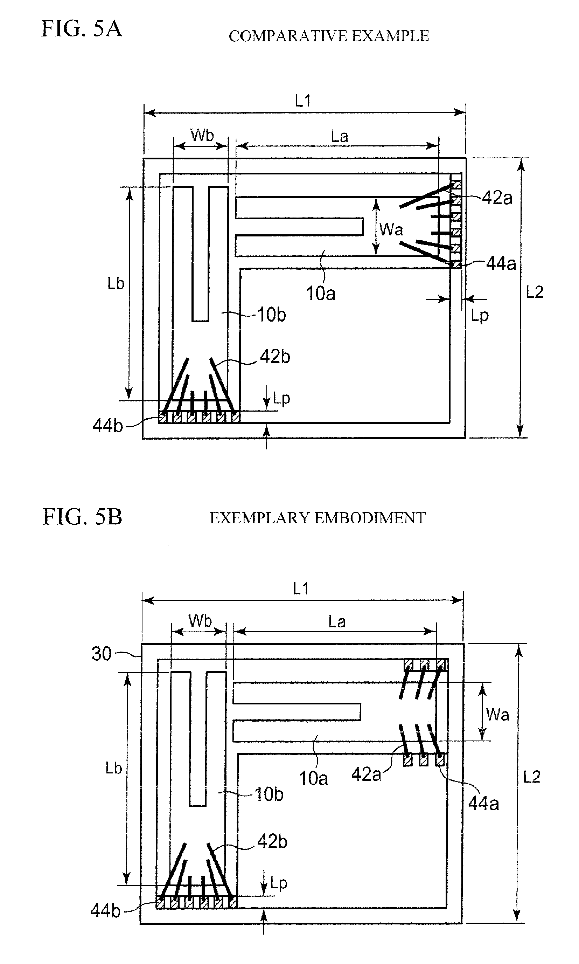

FIG. 5A and FIG. 5B are views respectively showing the first tuning-fork vibrator 10a, the second tuning-fork vibrator 10b, and wires 42a and 42b connecting pads 44a and 44b of the package 30 of a comparative example and those employed in a first exemplary embodiment of the present invention. Referring to FIG. 5A, in the comparative example, ends of the first tuning-fork vibrator 10a (ends of the arm portions) oppose a side face of the arm portion of the second tuning-fork vibrator 10b. The pads 44a of the package 30 are arranged in the vicinity of the other ends (the base portion) in a longitudinal direction of the first tuning-fork vibrator 10a (in other words, in the direction that the arm portion extends). Accordingly, first wires 42a connecting the first tuning-fork vibrator 10a and the pads 44a expend in a longitudinal direction of the first tuning-fork vibrator 10a. Al though not shown in FIG. 5A, the first wires 42a are respectively connected to the extraction electrodes 11e, 11f, 12e, 12f, and 14b. In a similar manner, the wires 42b connecting the second tuning-fork vibrator 10b and the pads 44b of the package 30 are extended to one end of the second tunina-fork vibrator 10b. Herein, one end refers to ends of the arm portions 11 and 12, and the other end refers to the end of the base portion 13.

Referring to FIG. 5B, in the first exemplary embodiment, the pads 44a are arranged in a width direction of the first tuning-fork vibrator 10a, and the first wires 42a connecting the first tuning-fork vibrator 10a and the pads 44a are extended to both sides of the width direction, unlike those of the comparative example. The second wires 42b connecting the second tuning-fork vibrator 10b and the pads 44b extend in the longitudinal direction of the second tuning-fork vibrator 10b in a similar manner to those of the comparative example.

In the angular velocity sensor having two tuning-fork vibrators 10a and 10b, the detection axes thereof virtually intersect at right angles with each other. In this case, in order to make the mounting area as small as possible, one ends of the first tuning-fork vibrator 10a are arranged to oppose a side face of the second tuning-fork vibrator 10b. If so, L1 (package size of the longitudinal direction of the first tuning-fork vibrator 10a) needs to be same or greater than La (length of the first tuning-fork vibrator 10a) plus Wa (width of the second tuning-fork vibrator 10b). Meanwhile, L2 (package size of the width direction of the first tuning-fork vibrator 10a) needs to be same or greater than Lb (length of the second tuning-fork vibrator 10b). As stated, the size L1 is longer than the size L2 in the package 30.

In view of the configuration, each of the first tuning-fork vibrator 10a and the second tuning-fork vibrator 10b includes: the arm portions 11 and 12 mainly having functions of vibrating; and the base portion 13 holding the arm portions 11 and 12 and being held by the package 30. Therefore, it is preferable that the base portions 13 of the first and second tuning-fork vibrators 10a and 10b be spaced apart from each other to be supported by the package 30. If the base portions 13 are supported adjacently or in the proximity, the vibrations of the first and second tuning-fork vibrators 10a and 10b will interfere with each other. Preferably, one ends of the arm portions 11 and 12 of the first tuning-fork vibrator 10a is arranged to oppose the side face of the arm portion of the second tuning-fork vibrator 10b. This causes the base portions 13 to be spaced apart from each other, thereby reducing the interference of the vibration in the first and second tuning-fork vibrators 10a and 10b.

In the first and second tuning-fork vibrators 10a and 10b, wires connecting the first tuning-fork vibrator 10a or 10b and the package 30 extend from the base portion 13, and the base portions 13 of the first and second tuning-fork vibrators 10a and 10b are spaced apart. Under the circumstances, if the first wires 42a and the second wires 42b respectively extend from the other ends of the longitudinal direction of the first tuning-fork vibrator 10a and from those of the second tuning-fork vibrator 10b as shown in FIG. 5A of the comparative example, the pads 44a and the pads 44b are respectively needed at the other end sides of the first and second tuning-fork vibrators 10a and 10b. This also increases the sizes L1 and L2 of the package 30, because a size Lp for the pads 44a and 44b is respectively added.

As stated heretofore, since the size L1 is longer than the size L2 in the package 30, the size L1 is especially needed to be reduced. In accordance with the first exemplary embodiment, the first wires 42a extend in the width direction of the first tuning-fork vibrator 10a. This eliminates the necessity of the pads 44a being arranged at the other end side of the first tuning-fork vibrator 10a, whereby the size L1 of the package 30 can be reduced by the size Lp of the pads 44a.

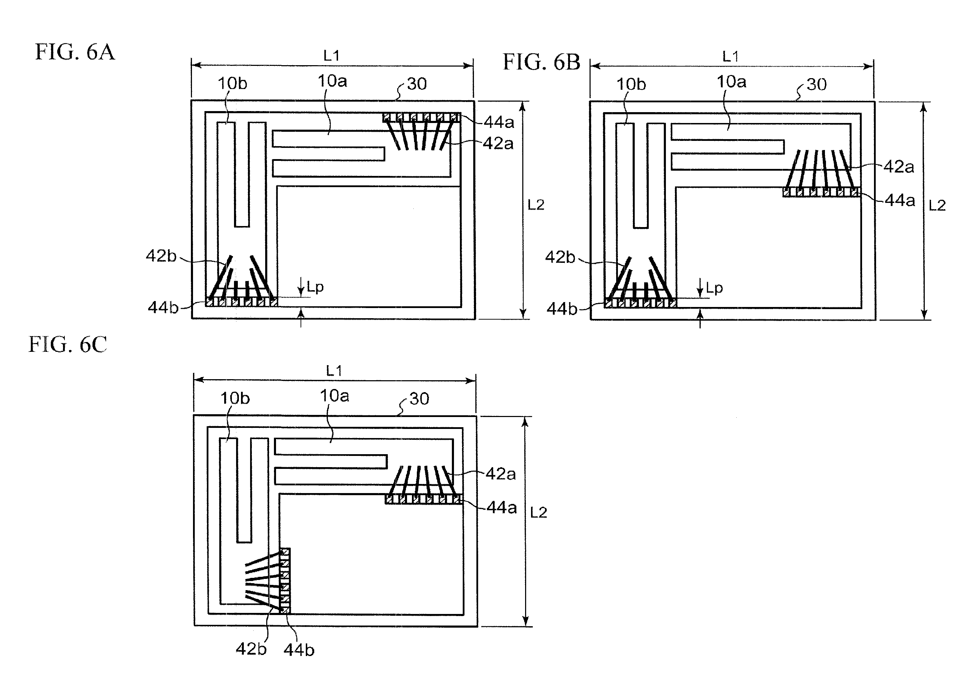

Referring now to FIG. 6A and FIG. 6B, the first wires 42a may be extended to the outside or inside of the first tuning-fork vibrator 10a in the width direction thereof. However, it is preferable that the first wires 42a be extended to the inside of the package 30. This allows the base portion of the first tuning-fork vibrator 10a and that of the second tuning-fork vibrator 10b to be spaced apart, whereby the interference in vibration of the tuning-fork vibrator can be further suppressed.

As shown in FIG. 5B, the second wires 42b may be extended in the width direction of the second tuning-fork vibrator 10b. However, it is preferable that the wires 42b be extended in the width direction of the second tuning-fork vibrator 10b, as shown in FIG. 6C. This makes it possible to reduce the size L2 of the package 30 by the size Lp of the pads 44b. It is also preferable that the second wires 42b be extended to the inside of the package 30. This allows the base portion of the first tuning-fork vibrator 10a and that of the second tuning-fork vibrator 10b to be spaced apart, whereby the interference of the vibration in the tuning-fork vibrator can be further suppressed. Herein, the wires are extended in the longitudinal direction or in the width direction means that the wires are extended to be connected to the pads 44a or 44b respectively provided in the longitudinal direction and in the width direction.

### (Second Exemplary Embodiment)

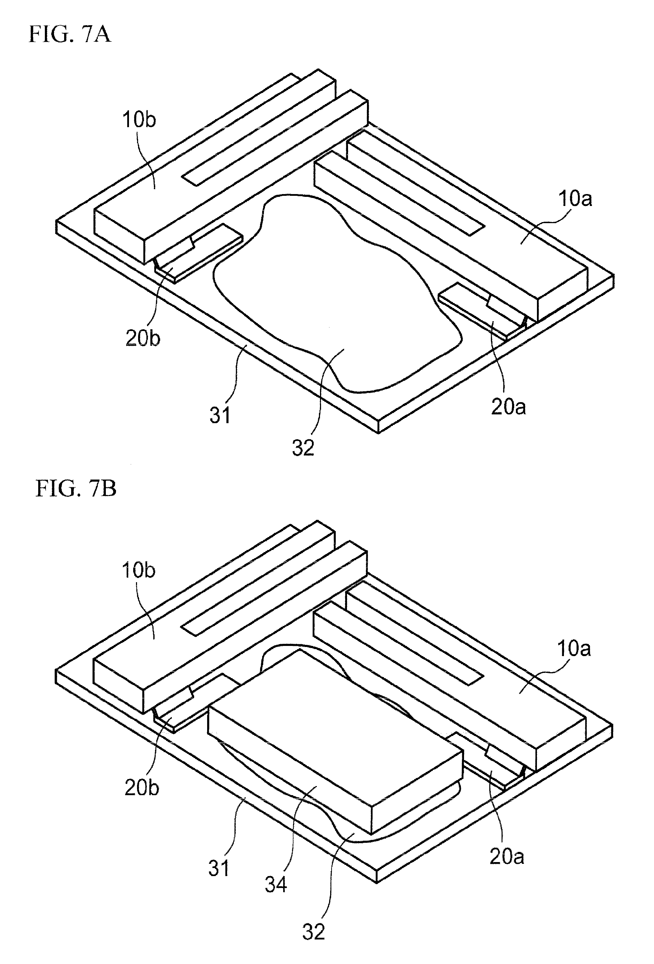

In a second exemplary embodiment, there is provided a sound absorbing portion on a printed circuit board serving as a mounting portion, in addition to the configuration employed in the first exemplary embodiment. Referring to FIG. 7A and FIG. 7B, two tuning-fork vibrators 10a and 10b perpendicular to each other are respectively mounted in a printed circuit board 31 serving as the mounting portion. Neither the first nor second wires are shown. Referring to FIG. 7A, there is provided a sound absorbing member 32 serving as a sound absorbing portion in the printed circuit board 31 so as to absorb vibrations of the first tuning-fork vibrator 10a and the second tuning-fork vibrator 10b. The sound absorbing member 32 may be made of a soft material for absorbing the vibrations of the printed circuit board 31, and resin such as, for example, epoxy resin, silicon resin, or the like may be employed. Referring to FIG. 7B, there is provided a weight 34 over the sound absorbing member 32, and other configurations are same as those of FIG. 7A. The sound absorbing member 32 also has a function as an adhesive to adhere the weight 34. In FIG. 7B, the weight 34 allows the sound absorbing member 32 to absorb more vibrations of the printed circuit board 31. In accordance with the second exemplary embodiment, the interference noise can be reduced, because the sound absorbing portion absorbs vibrations propagating along the printed circuit board 31 from one of the first tuning-fork vibrator 10a and the second tuning-fork vibrator 10b to the other thereof. Since the sound absorbing portion absorbs the vibration from one of the first tuning-fork vibrator 10a and the second tuning-fork vibrator 10b to the other thereof, it is preferable that the sound absorbing portion be interposed between the first tuning-fork vibrator 10a and the second tuning-fork vibrator 10b. Vibrations may be absorbed by partially increasing the thickness of the mounting portion of the printed circuit board 31 or the like to increase the inertia moment and make vibrations from the first tuning-fork vibrator 10a or the second tuning-fork vibrator 10b difficult to propagate.

### (Third Exemplary Embodiment)

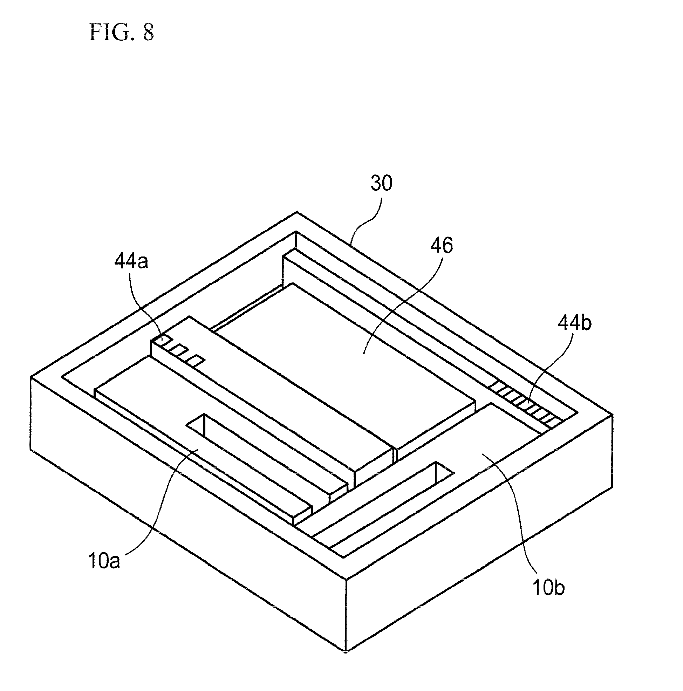

In a third exemplary embodiment, a sound absorbing member is used for holding the control circuit 46. FIG. 8 is a perspective view of the angular velocity sensor in accordance with the third exemplary embodiment. Referring to FIG. 8, there are provided the first tuning-fork vibrator 10a and the second tuning-fork vibrator 10b mounted in the cavity type package 30 in a similar manner to the first exemplary embodiment. The sound absorbing member 32 is provided in the package 30 in a similar manner as shown in FIG. 7A described in the second exemplary embodiment. The control circuit 46 having a similar function as that of the first exemplary embodiment is mounted over the sound absorbing member 32. The sound absorbing member 32 has a function of serving as an adhesive for holding the control circuit 46 with the package 30. In the third exemplary embodiment, the sound absorbing member 32 (sound absorbing portion) is a bonding member bonding the control circuit 46 and the package 30 so as to control the first tuning-fork vibrator 10a and the second tuning-fork vibrator 10b. This eliminates the necessity of providing the sound absorbing portion separately, thereby reducing the mounting area.

As a mounting portion, the package 30 is employed in the first and third exemplary embodiments, and the printed circuit board 31 is employed in the second exemplary embodiment. However, if the mounting portion has a function of mounting the first tuning-fork vibrator 10a and the second tuning-fork vibrator 10b, another configuration thereof may be applied. The first tuning-fork vibrator 10a and the second tuning-fork vibrator 10b respectively have two arm portions 11 and 12 in the above-described exemplary embodiments. However, the tuning-fork vibrator has three or more arm portions.

Although a few specific exemplary embodiments employed in the present invention have been shown and described, it would be appreciated by those skilled in the art that changes may be made in these exemplary embodiments without departing from the principles and spirit of the invention, the scope of which is defined in the claims and their equivalents.

The present invention is based on Japanese Patent Application No. 2006-117174 filed on April 20, 2006, the entire disclosure of which is hereby incorporated by reference.

## Claims

1. An angular velocity sensor comprising:
first and second tuning-fork vibrators, each of which respectively includes a base portion and multiple arm portions extending from the base portion; and
a mounting portion mounting the first and second tuning-fork vibrators,
wherein an end of an arm portion of the first tuning-fork vibrator opposes a side face of the second tuning-fork vibrator; and
a first wire connecting the first tuning-fork vibrator and the mounting portion extends in a width direction of the first tuning-fork vibrator.

2. The angular velocity sensor as claimed in claim 1, wherein the first wire extends to the inside of the mounting portion.

3. The angular velocity sensor as claimed in claim 1, wherein a second wire connecting the second tuning-fork vibrator and the mounting portion extends in a longitudinal direction of the second tuning-fork vibrator.

4. The angular velocity sensor as claimed in claim 1, wherein a second wire connecting the second tuning-fork vibrator and the mounting portion extends in the width direction of the second tuning-fork vibrator.

5. The angular velocity sensor as claimed in claim 4, wherein the second wire extends to the inside of the mounting portion.

6. The angular velocity sensor as claimed in claim 1, further comprising a sound absorbing portion provided in the mounting portion and absorbing vibrations of the first and second tuning-fork vibrators.

7. The angular velocity sensor as claimed in claim 6, wherein the sound absorbing portion serves as a bonding member bonding a control circuit controlling the first and second tuning-fork vibrators with the mounting portion.
